# EUROPÄISCHE PATENTSCHRIFT

(11) **EP 3 718 851 B1**
(45) Veröffentlichungstag und Bekanntmachung des Hinweises auf die Patenterteilung: **23.11.2022**
(21) Anmeldenummer: 20164931.6
(22) Anmeldetag: 23.03.2020
(51) Int. Cl.: B61K 13/00

(54) **RESTFLÄCHENABDECKUNG MIT EINEM AN EINE ÄUSSERE KONTUR EINES FAHRZEUGS ANPASSBAREN DICHTUNGSELEMENT**
SURFACE COVERING WITH A SEALING ELEMENT ADAPTABLE TO AN OUTER CONTOUR OF A VEHICLE
REVÊTEMENT DE SURFACE RÉSIDUEL DOTÉ D'UN ÉLÉMENT D'ÉTANCHÉITÉ POUVANT ÊTRE ADAPTÉ À UN CONTOUR EXTÉRIEUR D'UN VÉHICULE

(30) Priorität: 25.03.2019 DE 202019101675 U
(43) Veröffentlichungstag der Anmeldung: 07.10.2020
(73) Patentinhaber: Zugluft GmbH, 31249 Hohenhameln (DE)
(72) Erfinder: Kolan, Ralph, 31249 Hohenhameln (DE); Weiz, Dimitri, 31787 Hameln (DE)
(74) Vertreter: Scheffler, Jörg

(56) Entgegenhaltungen:
- EP-A1- 3 208 218
- EP-B1- 0 379 634
- DE-A1- 2 418 352
- US-A- 4 020 607

## Beschreibung

Die Erfindung betrifft eine Restflächenabdeckung zur Abdichtung eines Lichtraumprofils eines Fahrzeugs gegenüber zumindest einer ortsfesten Fläche mit einem an eine äußere Kontur des Fahrzeugs anpassbaren Dichtungselement, dass in einer Gebrauchsposition einen Zwischenraum zwischen dem Fahrzeug und der ortsfesten Fläche zumindest abschnittsweise ausfüllt, wobei das Dichtungselement eine zumindest im Wesentlichen gasundurchlässige, flexible Hülle aufweist, sodass durch eine Druckdifferenz durch die Hülle eingeschlossenen Fluids eine komprimierte Nichtgebrauchsposition oder eine expandierte Gebrauchsposition einstellbar ist, wobei das Dichtungselement zumindest einen von der Hülle eingeschlossenen elastisch verformbaren Körper aufweist, welcher durch Anlegen eines Unterdrucks an das von der Hülle eingeschlossene Fluid zur Einstellung der Nichtgebrauchsposition entgegen seiner Rückstellkraft komprimierbar ist und welcher bei einem Druckausgleich aufgrund der Rückstellkräfte seine expandierte Gebrauchsposition einnimmt, wobei das Dichtungselement in der Nichtgebrauchsposition von dem Fahrzeug trennbar ist und in der expandierten Gebrauchsposition wahlweise gegen unterschiedliche Flächenabschnitte des Fahrzeugs, insbesondere gegen einen Unterboden des Fahrzeugs, anlegbar ist.

Eine Restflächenabdeckung zur Abdichtung eines Lichtraumprofils in einem Torausschnitt eines Gebäudes gegenüber einem Fahrzeug wird in der Praxis vorzugsweise dann eingesetzt, wenn ein Tür- oder Torausschnitt eines Gebäudes oder Bauwerks lediglich teilweise verschlossen werden kann. Beispielsweise ist eine solche auch als Torrestflächenabdichtung bezeichnete Abdeckung sinnvoll, wenn das Fahrzeug im gewöhnlichen Einsatz im Bereich des Türausschnitts oder Torausschnitts positioniert ist.

Hierzu zählen beispielsweise die Gebäude der Eisenbahn- und Straßenbahnbetriebsgesellschaften, in denen jeweils nur ein Teil der Gesamtlänge des Zugs Platz findet.

Auf diese Weise werden Umwelteinflüsse in dem Gebäude auf ein Minimum reduziert. Insbesondere wird das Eindringen von Witterungseinflüssen ebenso wie Wärmeverluste verringert. Ganz allgemein ermöglicht die Restflächenabdeckung eine verbesserte Klimatisierung einschließlich einer effektiven Kühlung gegenüber der Umgebung.

Aus der gattungsgemäßen US 4 020 607 A ist ein Dichtungselement bekannt, welches eine Abdichtung eines in eine Türöffnung hineinragenden hinteren Endes eines Fahrzeugs gegenüber der Türöffnung ermöglicht. Insbesondere wird auch eine Anordnung des Dichtungselements an einem beweglichen Träger, insbesondere einem durch Federelemente mit einem Abstand zur Wand angeordneten, mit faltenbalgförmigen flexiblen Wandflächen ausgestatteten Tunnel, beschrieben.

Ein aus der DE 2 418 352 A1 bekanntes Dichtungselement weist einen von einem luftdichten Balg eingeschlossenen elastisch verformbaren Körper aus elastischem Material auf. Durch eine Druckdifferenz lässt sich die komprimierte Nichtgebrauchsposition oder die expandierte Gebrauchsposition einstellen, indem der Balg zur Einstellung der Nichtgebrauchsposition mittels einer Saugeinheit evakuiert wird. Wenn das Vakuum aufgehoben wird, nimmt der Balg seine expandierte Dimension an.

Aus der EP 0 379 634 B1 ist eine Baugruppe bekannt, die durch Druckfedern in ihrer absoluten oder relativen maximalen Breite gehalten wird. Wird innerhalb der Struktur ein entsprechender Unterdruck erzeugt, so tritt unter Oberwindung der Druckkraft der Druckfedern eine entsprechende Volumenverkleinerung der Baugruppe ein. Um diesen Unterdruck nicht ständig aufrechterhalten zu müssen, kann durch entsprechende Riegel eine Entspannung der Druckfedern verhindert werden, wenn die Baugruppe zwischen Wänden zurückgeführt worden ist.

Die DE 10 2008 046 203 A1 offenbart eine aufblasbare Luftmatte als Isolierung zwischen einem Fenster und einem Rollladen, wobei die Matte sich bei Anlegen eines Unterdrucks in ihre zusammengefaltete Stellung bewegt.

Die EP 1 953 099 A1 bezieht sich auf eine für ein Fahrzeug bestimmte aufblasbare Dichtung in einer Öffnung einer Stützstruktur mit mindestens zwei aufblasbaren Seitentaschen. Mittels einer Aufblasvorrichtung lassen sich die Seitentaschen zur Mitte der Öffnung hin ausdehnen, bis diese an einem in der Öffnung positionierten Fahrzeug dichtend anliegen.

Die EP 3 208 218 A1 betrifft ebenfalls eine solche aufblasbare Türdichtung zum Abdichten eines Fahrzeugs, die beiderseits des Fahrzeugs aufblasbare Elemente aufweist. Jedes aufblasbare Element hat einen vertikalen aufblasbaren Abschnitt zum Abdichten gegen die Seiten des Fahrzeugs, einen Vorhangabschnitt zum Abdichten gegen das Dach des Fahrzeugs und einen unteren Dichtungsabschnitt zum Abdichten zwischen dem Boden und dem Fahrzeug.

Die DE 103 01 513 A1 betrifft eine Einrichtung zum Abdichten einer Fenster- oder Türöffnung eines Raums gegen eindringendes Wasser. Ein formstabil aufblasbares Kissen mit mindestens einer randseitig umlaufenden, wulstartigen Dichtung dient zur dichten Anlage an einem die Türöffnung begrenzenden Mauerwerk und einem bodenseitigen Gegenlager.

Ferner ist aus der EP 1 813 723 A1 eine Schienenanordnung für in Straßendecken eingebettete Schienen bekannt, bei der in einer Vertiefung zwischen der Schiene und der Straßendecke ein Füllprofil aus einem elastomeren Werkstoff eingebettet ist, das eine Nut und/oder einen Kanal sowie Haltelippen aufweist. Das Füllprofil wird durch Aufsitzen auf einem Stahlprofil gehalten. Das Füllprofil ermöglicht es, dass die Schienen in der Straße ausgetauscht werden können, ohne dass der Straßenbelag zerstört wird.

Ferner beschreibt die DE 31 02 832 C2 ein Dichtprofil für eine Schiffsluke, die zum Öffnen mit Vakuum beaufschlagt wird und ansonsten aufgrund einer hohen Eigenspannung des Profils dichtend anliegt.

Als nachteilig bei solchen aufblasbaren Dichtungselementen hat es sich erwiesen, dass es beispielsweise aufgrund von scharfkantigen Vorsprüngen an dem Fahrzeug oder Fremdkörpern in der Praxis oftmals zu Beschädigungen des Dichtungselements kommt, sodass die Gebrauchsposition aufgrund entweichender Luft nicht zuverlässig eingehalten werden kann.

Der Erfindung liegt die Aufgabe zugrunde, eine Restflächenabdeckung mit einem bei zugleich geringem Platzbedarf und mit geringem Aufwand realisierbaren sowie an verschiedene Fahrzeuge anpassbaren Dichtungselement zu schaffen.

Diese Aufgabe wird erfindungsgemäß mit einer Torabdeckung gemäß den Merkmalen des Anspruchs 1 gelöst. Die weitere Ausgestaltung der Erfindung ist den Unteransprüchen zu entnehmen.

Erfindungsgemäß ist also das Dichtungselement an einem Träger oder an einer Führung translatorisch beweglich angeordnet und mittels des Trägers oder der Führung zwischen einer aufrechten, vertikalen Nichtgebrauchsposition und einer flachen, horizontalen Gebrauchsposition beweglich ausgeführt.

Durch die Umlenkung wird eine besonders platzsparende Nichtgebrauchs- bzw. Ruheposition ermöglicht, die den Einsatz der erfindungsgemäßen Restflächenabdeckung auch unter beengten Bedingungen ermöglicht. Zur Umlenkung des Dichtungselements kann eine beispielsweise mit einem Hohlprofil ausgestattete Führung verwendet werden, in der das Dichtungselement translatorisch beweglich angeordnet ist. In der Praxis kann das Dichtungselement von einer einseitig biegesteifen Kette nach der Art einer Energiekette gestützt werden, die zusätzlich eine Rollen- oder Gleitlagerung aufweisen kann.

Vorteilhaft wirkt sich dabei aus, dass ein möglicherweise in der Praxis auftretender Druckverlust durch eine Undichtigkeit in der Hülle dann unproblematisch ist, wenn die zum Anlegen des Dichtungselements an die Kontur, insbesondere den Unterboden des Fahrzeugs, beispielsweise ein Schienenfahrzeug, erforderliche Expansion der Hülle nicht durch einen Überdruck, sondern durch die Rückstellkraft eines hierzu zuvor mittels Unterdruck komprimierten Körpers erreicht wird. Somit dient in Abkehr der aus dem Stand der Technik bekannten Lösungen die Druckdifferenz in Form eines relativen Unterdrucks der Kompression des Körpers in der Hülle, der sich bei einer reduzierten Druckdifferenz oder einem Druckausgleich an das Fahrzeug anlegt. Eine Druckdifferenz ist somit nur zum Erreichen der Nichtgebrauchsposition erforderlich, die Gebrauchsposition hingegen nimmt das Dichtungselement bei einem Druckausgleich mit der Umgebung selbsttätig und ohne äußere Energiezufuhr ein. Falls es dabei zu einer Beschädigung der Hülle kommt, bleibt die Gebrauchsposition und somit die Funktion des Dichtungselements uneingeschränkt erhalten. Lediglich das Entfernen des Dichtungselements aus dem Bereich zwischen dem Fahrzeug und der ortsfesten Fläche, beispielsweise einer Boden- oder Gleisbettfläche, erfordert einen manuellen Eingriff, sofern die Luftabsaugung bzw. Evakuierung aufgrund der Undichtigkeit nicht möglich ist. Hierbei wird das Dichtungselement manuell komprimiert, beispielsweise unter Zuhilfenahme von Zugmitteln wie etwa Spanngurten, die zu diesem Zweck auch bereits an dem Dichtungselement vorhanden sein können. Es ist leicht verständlich, dass durch das erfindungsgemäße Dichtungselement in der Praxis ein weitaus zuverlässigerer Einsatz erreicht wird und ein vollständiger Ausfall des Dichtungselements selbst bei größeren Beschädigungen nahezu ausgeschlossen ist. Indem das Dichtungselement in der Nichtgebrauchsposition von dem Fahrzeug getrennt ist und in der expandierten Gebrauchsposition gegen unterschiedliche Flächenabschnitte des Fahrzeugs angelegt werden kann, ergeben sich vielfältige Einsatzmöglichkeiten, wobei das Fahrzeug keine vorbestimmte Position gegenüber der ortsfesten Fläche, beispielsweise einem Torausschnitt, einnehmen muss, sondern in jeder beliebigen Position der verbleibende Spalt durch das Dichtungselement abgedichtet werden kann.

Das Dichtungselement könnte ähnlich einem Kissen in den Zwischenraum manuell eingeschoben werden, wobei sich das geringe Eigengewicht des Dichtungselements vorteilhaft auswirkt. Besonders sinnvoll ist hingegen eine Ausführungsform, bei welcher das Dichtungselement an einem beweglichen Träger, insbesondere einem Tragarm angeordnet ist, wobei der Träger mit einem Manipulator oder einem Roboter verbunden sein kann, um so die Positionierung zu erleichtern und eine vorbestimmte Soll-Position mit geringem Aufwand und reproduzierbarer Genauigkeit zu erreichen. Das Dichtungselement lässt sich an dem Träger mittels einer mit einem offenen oder geschlossenen Profil ausgestatteten Führung translatorisch zwischen der Nichtgebrauchsposition und der Gebrauchsposition bewegen.

Es hat sich gezeigt, dass das Dichtungselement in der Führung oder an dem Träger durch das Profil in der komprimierten Nichtgebrauchsposition gehalten werden kann, wenn das Profil das Dichtungselement zumindest abschnittsweise einschließt, sodass das Dichtungselement an dem Träger unmittelbar einsatzbereit ist und nicht zuvor komprimiert werden muss. Dadurch werden unerwünschte Wartezeiten erheblich vermindert.

Zur Führung bzw. Aussteifung des Dichtungselements können insbesondere auch Federblechstreifen mit oder ohne Rollen, Polymerstreifen, beispielsweise aus Makrolon oder Polyethylen, jeweils mit oder ohne Rollen verwendet werden.

Der Träger oder die Führung können frei auskragend oder auf Rollen in den abzudichtenden Spalt des Lichtraumprofils eingebracht werden. Der verbleibende Spalt zwischen dem Träger und dem Boden kann beispielsweise durch Bürsten abgedichtet werden. Das expandierte Dichtungselement verlagert, sobald dieses gegen das Fahrzeug anliegt, den hierzu beispielsweise eingeschränkt beweglichen oder nachgiebigen Träger bzw. die Führung in Richtung der ortsfesten Fläche und sorgt so für die Wand-, Boden- oder Deckenabdichtung. Hierzu kann der Träger oder die Führung verformbar, auslenkbar oder mittels eines Rollenfahrwerks entgegen einer Federwirkung absenkbar sein. Bevorzugt ist das Dichtungselement mittels des Trägers automatisiert in den Zwischenraum einführbar.

Bei einer bevorzugten Variante liegt das Dichtungselement in der Gebrauchsposition gegen eine Bodenfläche und zumindest eine Seitenfläche des Fahrzeugs an oder weist mehrere in der Gebrauchsposition gegen unterschiedliche Flächen des Fahrzeugs anliegende, relativ zueinander bewegliche Teilelemente auf, die insbesondere das gesamte Lichtraumprofil verschließen.

Die Verwendung des Dichtungselements ist nicht auf Fahrzeuge wie etwa Schienenfahrzeuge, Straßenfahrzeuge oder auch Luftfahrzeuge beschränkt. Vielmehr eignet sich das Dichtungselement auch zur Abdichtung von mobilen Objekten, insbesondere transportablen Gegenständen, beispielsweise Ladegut.

Bei einer anderen Variante ist das Dichtungselement mit einer Anschlagfläche für das Fahrzeug ausgestattet, um so die gewünschte Relativposition mühelos einhalten zu können.

Das Dichtungselement könnte eine zylindrische Grundform aufweisen, die einen ebenso geformten Körper konzentrisch einschließt. Besonders zweckmäßig ist es hingegen, wenn das Dichtungselement zumindest ein den Körper und die Hülle umfangsseitig einschließendes, formstabiles Rahmenelement aufweist, um dem Dichtungselement so eine definierte geometrische Form sowohl in der Gebrauchsposition als auch in der NichtGebrauchsposition zu verleihen. Insbesondere eignet sich hierzu eine rechteckige bzw. quaderförmige Grundform des Rahmelements, welches zudem seinerseits mit Fixierhilfen zur Festlegung des Dichtungselements an ortsfesten Halteflächen ausgestattet sein kann. Ein solches Rahmenelement kann auch als Anlageelement mit einer Kontaktfläche zur Anlage an die Bodenfläche ausgestattet sein. Hierzu kann das Dichtungselement einen gegen die ortsfeste Fläche anlegbaren formstabilen Boden aufweisen.

Eine weitere besonders sinnvolle Ausgestaltungsform der Erfindung wird dadurch erreicht, dass das Dichtungselement einen mit der Hülle gasdicht verbundenen, wannen- oder schalenförmigen offenen Behälter aufweist, der gemeinsam mit dem Dichtungselement den Körper gasdicht einschließt. Der nach oben offene Behälter ist dabei so bemessen, dass dieser die Hülle in der Nichtgebrauchsposition vollständig aufnimmt. Das Dichtungselement lässt sich so einfach handhaben und ist in der Nichtgebrauchsposition vor äußeren Einflüssen optimal geschützt.

Der zur Evakuierung der Hülle erforderliche Sauganschluss könnte in die Hülle integriert sein. Besonders praxisnah ist hingegen eine Variante der Erfindung, bei welcher der Behälter zumindest einen, insbesondere mit einem Ventil ausgestatteten Sauganschluss aufweist, welcher sich somit in einem während der Expansion oder Kompression des Körpers stationären Bereich des Dichtungselements befindet. Das Risiko einer Beschädigung wird dadurch wesentlich vermindert.

Weiterhin hat es sich als besonders vorteilhaft erwiesen, wenn der Körper aus einem oder mehreren konturierten und/oder formlosen Schaumstoffelementen besteht, die für eine dauerhaft ausreichende Rückstellkraft sorgen. Dabei kann der Körper eine an das Fahrzeug angepasste Kontur aufweisen, welche die Abdichtung weiter verbessert. Zudem lassen sich beispielsweise auch formschlüssige Verbindungen des Dichtungselements mit dem Fahrzeug realisieren.

Die Schaumstoffelemente können auch aus einem gelochten Schaum mit beispielsweise regelmäßigen Ausnehmungen bestehen, um so die in der expandierten Gebrauchsposition gewünschte Kontur, gegebenenfalls auch Hinterschneidungen erzeugen zu können, wobei selbstverständlich vollkommen konturlose Dichtungselemente erfindungsgemäß nicht ausgeschlossen sind.

Der von der Hülle eingeschlossene Körper des Dichtungselements könnte durch eine äußere Krafteinwirkung komprimiert werden. Beispielsweise könnte hierzu ein mit einem Stellmittel gekoppeltes Zugmittel dienen. Besonders Erfolg versprechend ist hingegen eine Ausgestaltungsform der Erfindung, bei welcher das Dichtungselement mit einer Absaugeinheit, beispielsweise einer Pumpe ausgestattet ist, durch welche die in der Hülle eingeschlossene Luft zu einem erheblichen Teil abgesaugt und so das Volumen des Körpers durch Kompression vermindert wird.

Dabei kann die beispielsweise als Unterdruckpumpe ausgeführte Absaugeinheit als Massekörper für das Dichtungselement dienen, um das Dichtungselement unter dem Einfluss der Schwerkraft in die Gebrauchsposition zu bewegen. Alternativ ist die Unterdruckpumpe stationär angeordnet, sodass lediglich eine vorzugsweise flexible Schlauchverbindung erforderlich ist.

Besonders bevorzugt ist die Absaugeinheit gemeinsam mit dem Dichtungselement zwischen der Nichtgebrauchsposition und der expandierten Gebrauchsposition beweglich oder mit dem Dichtungselement durch eine flexible Schlauchleitung verbunden.

Indem das Dichtungselement ein Rückschlagventil aufweist, welches das Rückströmen der abgesaugten Luft in das Innere der Hülle verhindert, kann die Absaugeinheit bei Erreichen der Nichtgebrauchsposition des Körpers abgeschaltet oder auch von dem Dichtungselement getrennt werden und steht dadurch für anderweitige Nutzungen, beispielsweise auch für weitere Dichtungselemente zur Verfügung.

Dabei ist es von Vorteil, wenn das Dichtungselement mit einem Sensor zur Erfassung der Druckdifferenz ausgestattet ist, um so die Druckdifferenz in einem für den Körper geeigneten Bereich einstellen zu können. Bei Erreichen bestimmter Maximal- oder Minimalwerte wird von dem Sensor ein Signal ausgelöst.

Zudem hat es bereits als vorteilhaft erwiesen, wenn das Dichtungselement in der Gebrauchsposition zusätzlich mit einem Überdruck gegenüber dem Umgebungsdruck beaufschlagbar ist, um so die Vorspannung des Dichtungselements gegenüber dem Fahrzeug durch den Überdruck zu erhöhen und so die Fixierung bzw. Abdichtung zu verbessern.

Besonders bevorzugt weist das Dichtungselement mehrere unabhängig voneinander mit einem Unterdruck beaufschlagbare, strömungstechnisch getrennte Bereiche auf, um so eine noch bessere Anpassung an eine nahezu beliebige Kontur des Fahrzeugs zu ermöglichen. Mehrere Bereiche können hierzu separat nacheinander, gleichzeitig oder paarweise mit Unterdruck beaufschlagt werden. In der Gebrauchsposition kann weiterhin auch eine Druckdifferenz zwischen den verschiedenen Bereichen eingestellt werden.

Darüber hinaus ist es vorteilhaft, wenn die Hülle aus einer gasdichten Folie oder einem gasdicht beschichteten Gewebe besteht, welches beispielsweise auch mit formgebenden Einsätzen oder Sichtfenstern zur Kontrolle des Körpers ausgestattet sein kann.

Um die gewünschte gestreckte Orientierung in der Gebrauchsposition zuverlässig zu erreichen und die Positionierung des Dichtungselements zu erleichtern, dient ein Federelement, welches das Dichtungselement in seiner Gebrauchsposition vorspannt. Dabei können neben ebenen oder gestreckten Konturen auch nahezu beliebige andere angepasste Konturen mit einem oder mehreren Federelementen erzeugt werden.

Ferner können auch Signalmittel, insbesondere Leuchtmittel in das Dichtungselement integriert sein, welche die Sichtbarkeit verbessern. Dadurch kann vermieden werden, dass das Entfernen des Dichtungselements aus dem Zwischenraum versehentlich unterlassen wird.

Darüber hinaus ist es auch von Vorteil, wenn das Dichtungselement elektrisch und/oder thermisch isolierende Eigenschaften aufweist und daher auch von Laien vollkommen risikolos eingesetzt werden kann.

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt jeweils eine perspektivische Prinzipdarstellung in
- Fig. 1: ein erfindungsgemäßes Dichtungselement in einer expandierten Gebrauchsposition;
- Fig. 2: eine komprimierte Nichtgebrauchsposition des in der Figur 1 gezeigten Dichtungselements;
- Fig. 3a bis 3e: ein Ablaufschema beim Einbringen eines schwenkbaren Dichtungselements in einen Unterbodenbereich eines Schienenfahrzeugs, welches nicht erfindungsgemäß ausgebildet ist;
- Fig. 4a bis 4d: ein Ablaufschema beim Abdichten eines seitlichen Lichtraumprofils eines Schienenfahrzeugs, welches nicht erfindungsgemäß ausgebildet ist;

- Fig. 5a bis 5d: ein Ablaufschema beim Einbringen von zwei translatorisch beweglichen Dichtungselementen in einen Unterbodenbereich eines Schienenfahrzeugs, welches nicht erfindungsgemäß ausgebildet ist;
- Fig. 6a bis 6d: ein Ablaufschema beim Einbringen eines translatorisch von einer vertikalen in die horizontale beweglichen Dichtungselements in den Unterbodenbereich;
- Fig. 7a: eine Vorderansicht einer für das Dichtungselement bestimmten;
- Fig. 7b: eine Seitenansicht der in der Figur 3 gezeigten Führung;
- Fig. 8a bis 8d: ein Ablaufschema bei der Abdichtung eines Lichtraumprofils eines Flugzeugs durch ein an einem beweglichen Tor angeordneten Dichtungselement, welches nicht erfindungsgemäß ausgebildet ist.

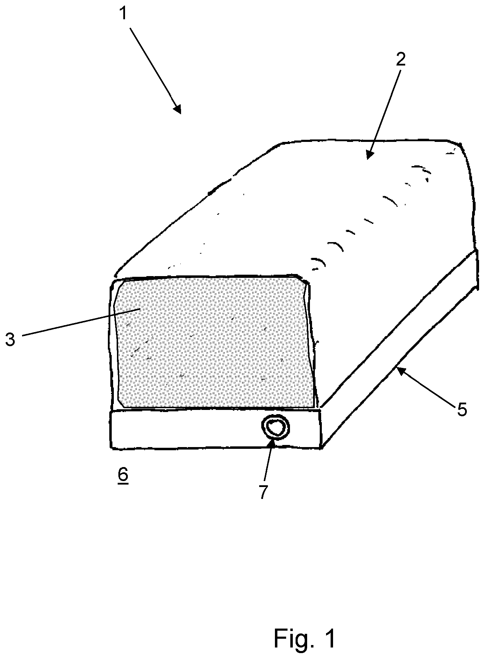

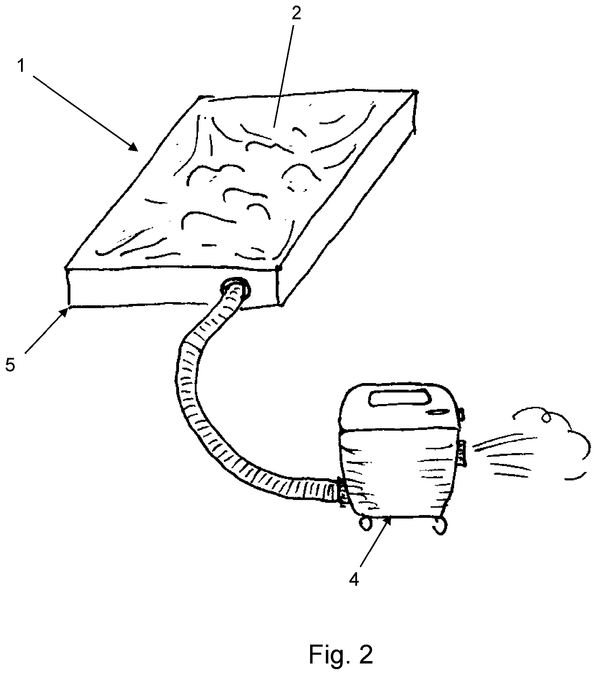

Ein erfindungsgemäßes, in Verbindung mit einer Restflächenabdeckung einsetzbares Dichtungselement 1 wird nachstehend anhand der Figuren 1 und 2 näher erläutert. Das Dichtungselement 1 ist durch eine Druckdifferenz an eine äußere Kontur eines Fahrzeugs 11 stufenlos und konturbündig anpassbar. Hierzu hat das Dichtungselement 1 einen von einer gasdichten Hülle 2 eingeschlossenen elastisch verformbaren, lediglich andeutungsweise dargestellten Körper 3. Durch Anlegen eines relativen Unterdrucks gegenüber der Umgebung mittels einer als Unterdruckpumpe ausgeführten Absaugeinheit 4 wird die Hülle 2 evakuiert und der als Schaumkörper ausgeführte Körper 3 entgegen seiner Rückstellkraft komprimiert, wie dies in Figur 2 zu erkennen ist. In diesem komprimierten Zustand in der Nichtgebrauchsposition ist der Körper 3 von einem wannenförmigen Behälter 5 mit einem Sauganschluss 7 eingeschlossen, sodass das Dichtungselement 1 problemlos in einen Zwischenraum zwischen dem Fahrzeug und einer ortsfesten Fläche 6 eingeführt werden kann und dabei vor Beschädigung geschützt ist.

Durch einen Druckausgleich expandiert der Körper 3 und legt sich mit seiner Hülle 2 dichtend gegen das Fahrzeug an, um so den Zwischenraum als Barriere zu verschließen. Zum Entfernen des Dichtungselements 1 wird der Körper 3 zunächst wieder komprimiert. Die Erfindung beruht somit auf der Nutzung der Rückstellkraft des komprimierbaren Körpers 3, der durch die Hülle 2 eingeschlossen ist.

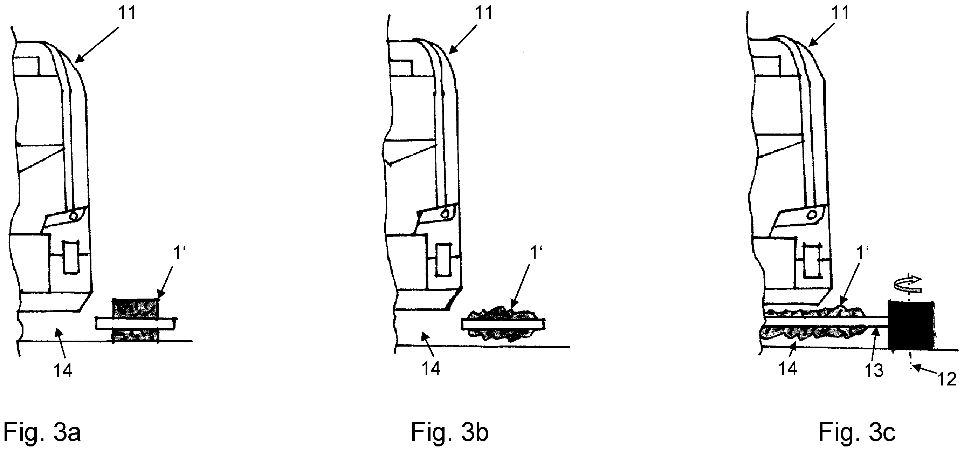

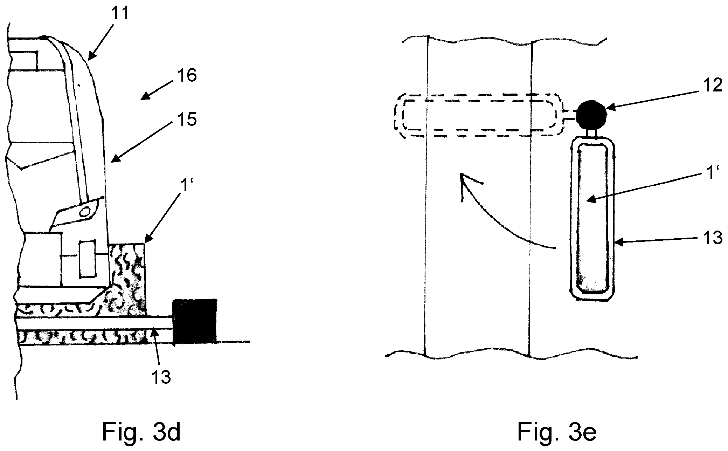

Das Einbringen eines um eine vertikale Achse 12 schwenkbaren Dichtungselements 1' in einen Unterbodenbereich eines als Schienenfahrzeug ausgeführten Fahrzeugs 11 wird anhand der Figuren 3a bis 3e verdeutlicht. Die Figur 3e zeigt eine Draufsicht auf das um die Achse 12 schwenkbare Dichtungselement 1', welches in einem formstabilen, ringförmig geschlossenen Rahmen 13 gehalten ist. Dadurch kann das Dichtungselement 1' sowohl nach oben als nach unten expandieren, wie dies in den Figuren 3a bis 3e erkennbar ist.

In der Figur 3a ist das Dichtungselement 1' zunächst in einer expandierten Ruheposition beabstandet von dem Fahrzeug 11 gezeigt. Durch Evakuieren mittels der in der Figur 2 gezeigten Absaugeinheit 4 wird anschließend die in der Figur 3b gezeigte komprimierte Nichtgebrauchsposition eingestellt und das Dichtungselement 1', wie in der Figur 3c gezeigt, um die Achse 12 in den Unterbodenbereich 14 des Fahrzeugs 11 eingeschwenkt. Durch Öffnen eines nicht gezeigten Ventils und Rückströmen von Umgebungsluft in das Dichtungselement 1' führt die Rückstellkraft des in der Figur 1 gezeigten, verformten Körpers 3 dazu, dass das Dichtungselement 1' schließlich seine in der Figur 3d erkennbare expandierte Gebrauchsposition einnimmt, in welcher im Unterbodenbereich 14 und angrenzenden Seitenbereich 15 ein das Fahrzeug 11 umgebende Lichtraumprofil 16 von dem Dichtungselement 1 vollständig abgedichtet ist.

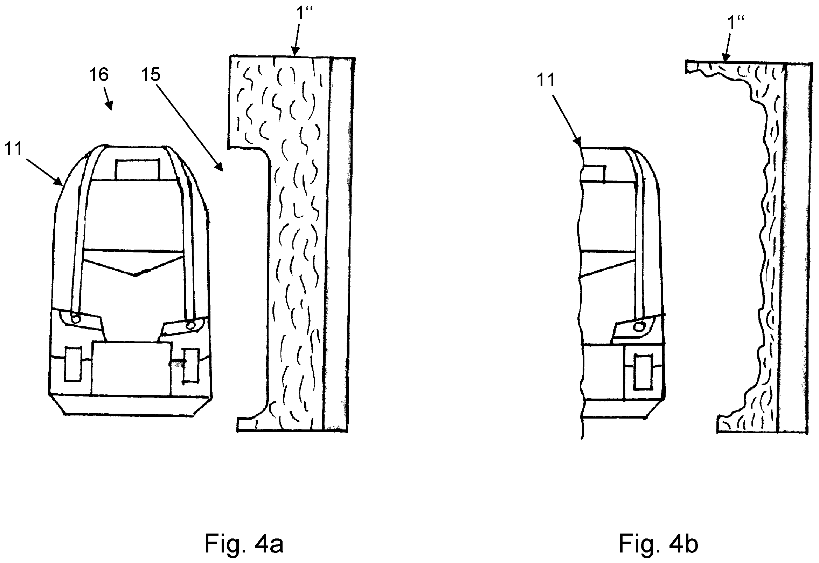

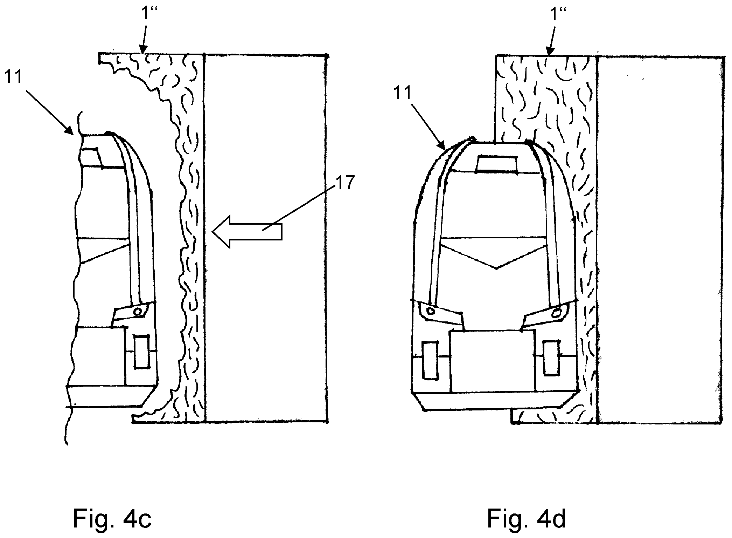

In den Figuren 4a bis 4d ist das Ablaufschema beim Abdichten des Seitenbereichs 15 des Lichtraumprofils 16 des Fahrzeugs 11 mittels eines weiteren Dichtungselements 1" gezeigt. Ausgehend von der Ruheposition in der Figur 4a wird zunächst eine komprimierte Nichtgebrauchsposition durch Luftabsaugung eingestellt, wie in der Figur 4b gezeigt. Anschließend erfolgt eine Zustellung der gesamten Restflächenabdeckung einschließlich des Dichtungselements 1" in Pfeilrichtung 17 auf das Fahrzeug 11. In der expandierten Gebrauchsposition schließt das Dichtungselement 1" den oberen Bereich sowie den Seitenbereich 15 des Lichtraumprofils 16, wie in der Figur 4d gezeigt, ein, sodass mit einem nicht gezeigten spiegelsymmetrischen Dichtungselement das gesamte Lichtraumprofil 16 des Fahrzeugs 11 geschlossen werden kann.

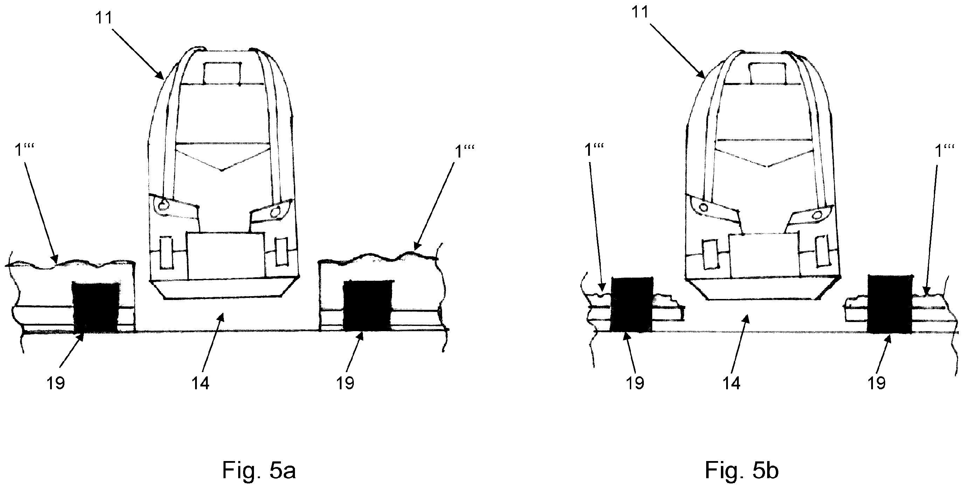

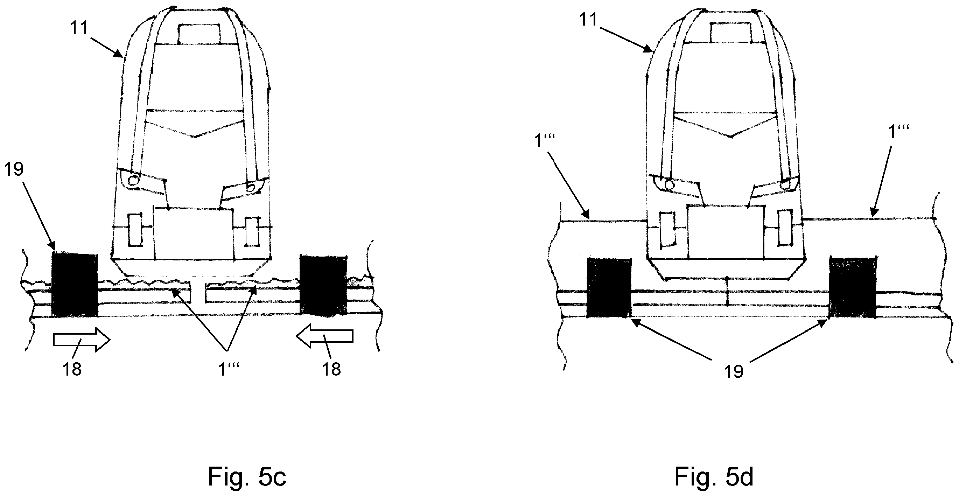

Eine solche, insbesondere gekoppelte gegensinnige Zustellbewegung in Pfeilrichtung 18 ist in den Figuren 5a bis 5d verdeutlicht, die ein Ablaufschema beim Einbringen von zwei translatorisch beweglichen Dichtungselementen 1‴ in den Unterbodenbereich 14 des Fahrzeugs 11 zeigen. Dabei sind die Dichtungselemente 1‴ an einer Führung 19 translatorisch und frei auskragend geführt. Der verbliebene Bodenspalt unterhalb der Führung 19 wird dabei von einer nicht gezeigten Dichtung, beispielsweise einem Bürstenelement, abgedichtet.

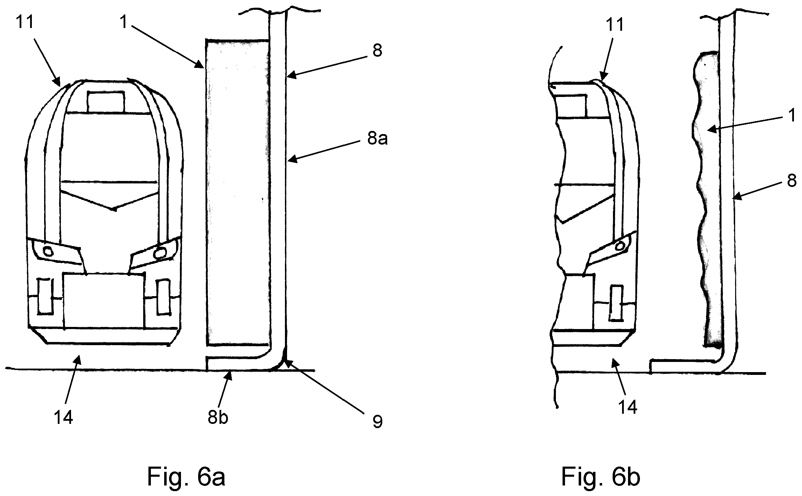

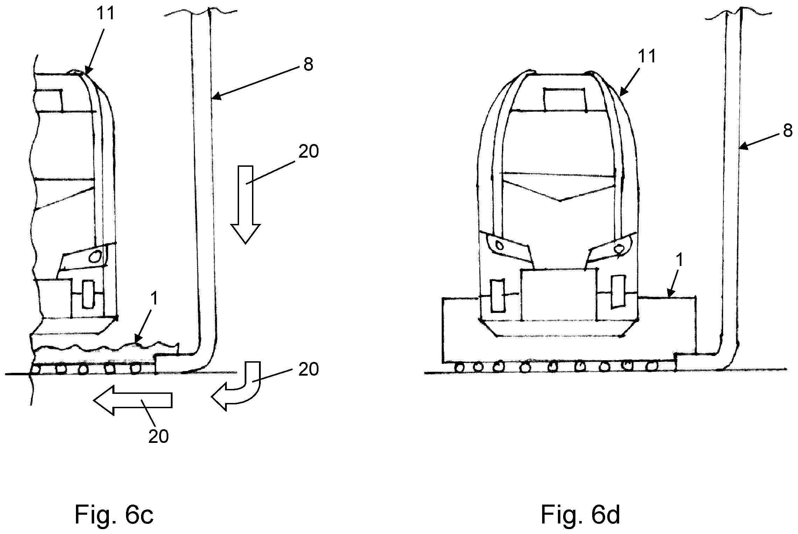

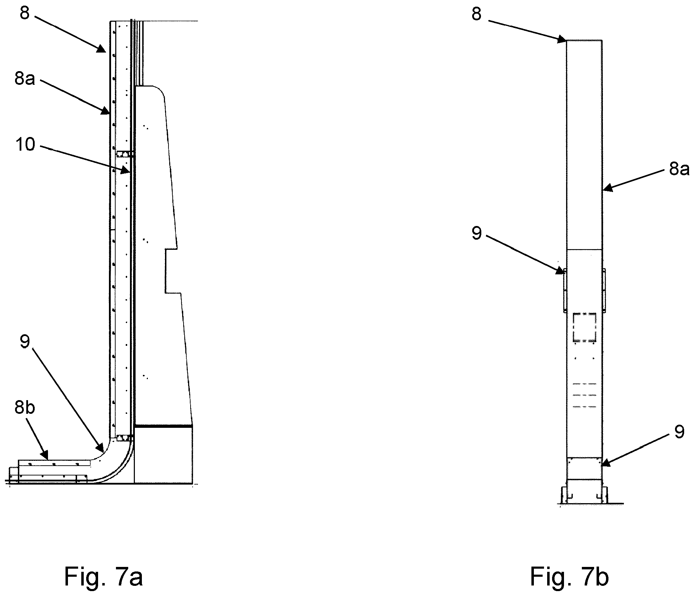

Bei einer anderen, in den Figuren 6a bis 6d gezeigten Variante ist das Dichtungselement 1 in einer in den Figuren 7a und 7b in einer Vorderansicht und in einer Seitenansicht detailliert dargestellten Führung 8 translatorisch beweglich. In der in der Figur 6a gezeigten expandierten Ruhestellung ist das Dichtungselement 1 zunächst unbeweglich fixiert. Durch evakuieren des Dichtungselements 1 ist dieses entlang der Führung beweglich. Dabei kann das Dichtungselement 1 mittels der einen vertikalen Führungsabschnitt 8a und einen horizontalen Führungsabschnitt 8b umfassenden Führung 8 in Pfeilrichtung 20 von einer vertikalen Nichtgebrauchsposition in eine horizontale Gebrauchsposition verschoben werden. Dabei ist bei einem die beiden Führungsabschnitte 8a, 8b verbindenden kurvenförmigen Umlenkelement 9 der Kurvenradius derart bemessen, dass die Umlenkung des Dichtungselements 1 mit einem geringen Kraftaufwand möglich ist. Insbesondere kann die Führung 8 derart ausgeführt sein, dass das Dichtungselement 1 wahlweise sowohl in der komprimierten Nichtgebrauchsposition als auch in der expandierten Gebrauchsposition entlang der Führung 8 beweglich ist. In der in Figur 6d gezeigten expandierten Gebrauchsposition liegt das Dichtungselement 1 in dem Unterbodenbereich 14 des Fahrzeugs 11 dichtend an. Durch die Umlenkung wird eine besonders platzsparende Nichtgebrauchs- bzw. Ruheposition ermöglicht, die den Einsatz der erfindungsgemäßen Restflächenabdeckung auch unter beengten Bedingungen ermöglicht.

Darüber hinaus kann das Dichtungselement 1 in dem vertikalen Führungsabschnitt 8a mittels eines Profils 10 auch ohne Unterdruck in der komprimierten Nichtgebrauchsposition gehalten werden, sodass das Dichtungselement 1 nach der Verlagerung in die horizontale Position unmittelbar gebrauchsbereit ist und das zeitaufwendige Evakuieren des Dichtungselements 1 durch Anlegen eines Unterdrucks mittels der in der Figur 2 gezeigten Absaugeinheit 4 entfallen kann.

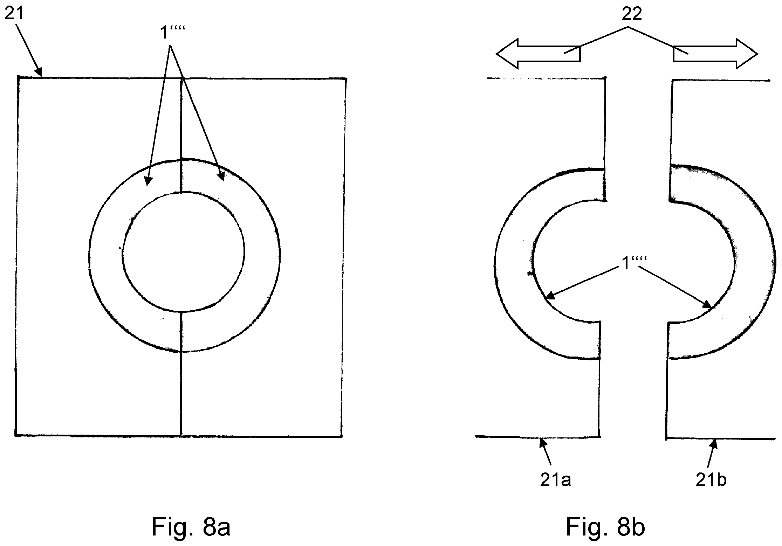

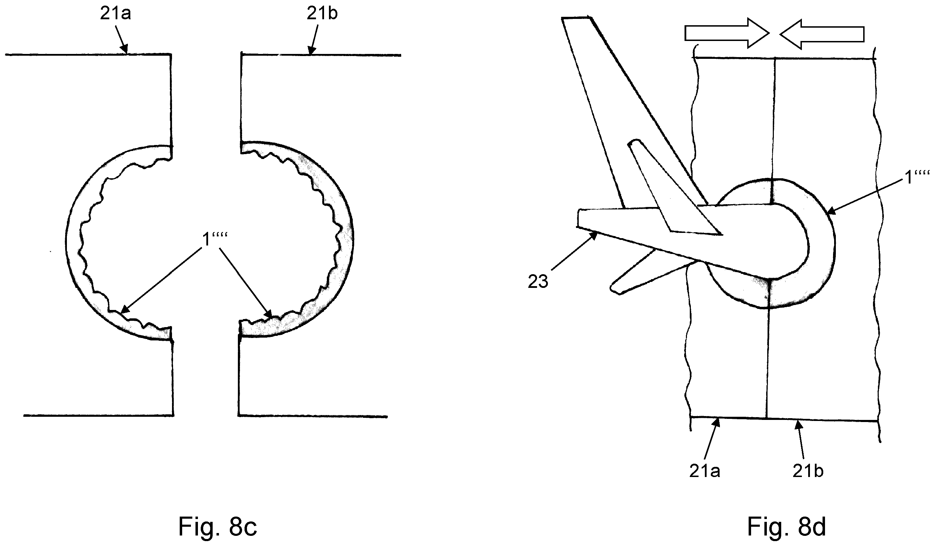

Ergänzend ist in den Figuren 8a bis 8d noch eine Variante eines an einem beweglichen Tor 21 angeordneten Dichtungselements 1ʺʺ gezeigt. Eine geschlossene Stellung des Tors 21 mit expandiertem Dichtungselement 1ʺʺ ist in der Figur 8a zu erkennen, wobei der ausgesparte kreisförmige Ausschnitt beispielsweise auch durch ein nicht gezeigtes, durch das expandierte Dichtungselement 1ʺʺ klemmschlüssig fixierbares Abdeckelement verschlossen sein kann. Zum Gebrauch werden die Torsegmente 21a, 21b, wie in der Figur 8b zu erkennen, gegensinnig in Pfeilrichtung 22 verschoben, um so einen ausreichenden Durchlass für das in der Figur 8d andeutungsweise dargestellte, als Flugzeug ausgeführte Fahrzeug 23 zu schaffen. Anschließend wird, wie in der Figur 8c zu erkennen, durch Evakuieren die komprimierte Nichtgebrauchsposition eingestellt. Nach dem Schließen des Tors 21 und dem Expandieren des Dichtungselements 1ʺʺ wird die expandierte Gebrauchsposition erreicht, in der ein Abschnitt des Fahrzeugs 23 dichtend eingeschlossen ist.

### BEZUGSZEICHENLISTE

- 1: Dichtungselement
- 2: Hülle
- 3: Körper
- 4: Absaugeinheit
- 5: Behälter

- 6: Fläche
- 7: Sauganschluss
- 8: Führung
- 8a, 8b: Führungsabschnitt
- 9: Umlenkelement
- 10: Profil

- 11: Fahrzeug
- 12: Achse
- 13: Rahmen
- 14: Unterbodenbereich
- 15: Seitenbereich

- 16: Lichtraumprofil
- 17: Pfeilrichtung
- 18: Pfeilrichtung
- 19: Führung
- 20: Pfeilrichtung

- 21: Tor
- 21a, 21b: Torsegment
- 22: Pfeilrichtung
- 23: Fahrzeug

## Patentansprüche

1. Restflächenabdeckung zur Abdichtung eines Lichtraumprofils eines Fahrzeugs (11, 23) gegenüber zumindest einer ortsfesten Fläche (6) mit einem an eine äußere Kontur des Fahrzeugs (11, 23) anpassbaren Dichtungselement (1), das in einer Gebrauchsposition einen Zwischenraum zwischen dem Fahrzeug (11, 23) und der ortsfesten Fläche (6) zumindest abschnittsweise ausfüllt, wobei das Dichtungselement (1) eine zumindest im Wesentlichen gasundurchlässige, flexible Hülle (2) aufweist, sodass durch eine Druckdifferenz durch die Hülle (2) eingeschlossenen Fluids eine komprimierte Nichtgebrauchsposition oder eine expandierte Gebrauchsposition einstellbar ist, wobei das Dichtungselement (1) zumindest einen von der Hülle (2) eingeschlossenen elastisch verformbaren Körper (3) aufweist, welcher durch Anlegen eines Unterdrucks an das von der Hülle (2) eingeschlossene Fluid zur Einstellung der Nichtgebrauchsposition entgegen seiner Rückstellkraft komprimierbar ist und welcher bei einem Druckausgleich aufgrund der Rückstellkräfte seine expandierte Gebrauchsposition einnimmt, wobei das Dichtungselement (1) in der Nichtgebrauchsposition von dem Fahrzeug (11, 23) trennbar ist und in der expandierten Gebrauchsposition wahlweise gegen unterschiedliche Flächenabschnitte des Fahrzeugs (11, 23), insbesondere gegen einen Unterboden des Fahrzeugs (11, 23), anlegbar ist, **dadurch gekennzeichnet, dass** das Dichtungselement (1) an einem Träger und/oder an einer Führung (8) translatorisch beweglich angeordnet ist und dass das Dichtungselement (1) mittels des Trägers und/oder der Führung (8) zwischen einer aufrechten, vertikalen Nichtgebrauchsposition und einer flachen, horizontalen Gebrauchsposition beweglich ausgeführt ist.

2. Restflächenabdeckung nach Anspruch 1, **dadurch gekennzeichnet, dass** der Träger beweglich ist.

3. Restflächenabdeckung nach Anspruch 2, **dadurch gekennzeichnet, dass** der bewegliche Träger ein Tragarm ist.

4. Restflächenabdeckung nach zumindest einem der vorhergehenden Ansprüche, **dadurch gekennzeichnet, dass** der Träger und/oder die Führung (8) ein das Dichtungselement (1) in der Nichtgebrauchsposition zumindest abschnittsweise einschließendes Profil (10) aufweist.

5. Restflächenabdeckung nach zumindest einem der vorhergehenden Ansprüche, **dadurch gekennzeichnet, dass** mittels des Trägers und/oder der Führung (8) das Dichtungselement (1) in der Gebrauchsposition frei auskragend in das abzudichtende Lichtraumprofil (16) hineinragt.

6. Restflächenabdeckung nach zumindest einem der vorhergehenden Ansprüche, **dadurch gekennzeichnet, dass** das Dichtungselement (1) in der Gebrauchsposition gegen eine Bodenfläche und zumindest eine Seitenfläche des Fahrzeugs (11, 23) anliegt.

7. Restflächenabdeckung nach zumindest einem der vorhergehenden Ansprüche, **dadurch gekennzeichnet, dass** das Dichtungselement (1) mehrere in der Gebrauchsposition gegen unterschiedliche Flächen des Fahrzeugs (11, 23) anliegende, relativ zueinander bewegliche Teilelemente aufweist.

8. Restflächenabdeckung nach zumindest einem der vorhergehenden Ansprüche, **dadurch gekennzeichnet, dass** das Dichtungselement (1) zumindest ein den Körper (3) und die Hülle (2) umfangsseitig einschließenden, formstabilen Rahmen (13) aufweist.

9. Restflächenabdeckung nach zumindest einem der vorhergehenden Ansprüche, **dadurch gekennzeichnet, dass** der Körper (3) aus einem oder mehreren konturierten und/oder formlosen Schaumstoffelementen besteht.

10. Restflächenabdeckung nach zumindest einem der vorhergehenden Ansprüche, **dadurch gekennzeichnet, dass** der Körper (3) zumindest abschnittsweise eine die Kontur in der Gebrauchsposition bestimmende Ausnehmung und/oder Durchbrechung aufweist.

11. Restflächenabdeckung nach zumindest einem der vorhergehenden Ansprüche, **dadurch gekennzeichnet, dass** das Dichtungselement (1) mit einer Absaugeinheit (4) ausgestattet ist.

12. Restflächenabdeckung nach zumindest einem der vorhergehenden Ansprüche, **dadurch gekennzeichnet, dass** das Dichtungselement (1) in der Gebrauchsposition mit einem Überdruck gegenüber dem Umgebungsdruck beaufschlagbar ist.

13. Restflächenabdeckung nach zumindest einem der vorhergehenden Ansprüche, **dadurch gekennzeichnet, dass** das Dichtungselement (1) mehrere unabhängige voneinander mit einem Unterdruck beaufschlagbare, strömungstechnisch getrennte Bereiche aufweist.

14. Restflächenabdeckung nach zumindest einem der vorhergehenden Ansprüche, **dadurch gekennzeichnet, dass** das Dichtungselement (1) entgegen der Rückstellkraft eines Federelements aus der Gebrauchsposition in die Nichtgebrauchsposition beweglich ist.

## Claims

1. Residual area covering for sealing a structure gauge of a vehicle (11, 23) in relation to at least one stationary face (6) having a sealing element (1) which is adaptable to an external contour of the vehicle (11, 23) and in a use position fills an intermediate space between the vehicle (11, 23) and the stationary face (6) at least in portions, wherein the sealing element (1) has an at least substantially gas-impermeable, flexible casing (2) such that a compressed non-use position or an expanded use position is adjustable by a pressure differential of fluid enclosed by the casing (2), wherein the sealing element (1) has at least one elastically deformable member (3) which is enclosed by the casing (2) and which, by applying negative pressure to the fluid enclosed by the casing (2), for adjusting the non-use position is compressible counter to the restoring force of said member (3), and which, in the event of a pressure equalization, by virtue of the restoring forces assumes the expanded use position of said member (3), wherein the sealing element (1) in the non-use position is separable from the vehicle (11, 23), and in the expanded use position is able to be brought to bear selectively on dissimilar area portions of the vehicle (11, 23), in particular on an undercarriage of the vehicle (11, 23), **characterized in that** the sealing element (1) is disposed so as to be movable in a translatory manner on a support and/or on a guide (8), and **in that** the sealing element (1) by means of the support and/or the guide (8) is embodied so as to be movable between an upright, vertical non-use position and a flat, horizontal use position.

2. Residual area covering according to Claim 1, **characterized in that** the support is movable.

3. Residual area covering according to Claim 2, **characterized in that** the movable support is a support arm.

4. Residual area covering according to at least one of the preceding claims, **characterized in that** the support and/or the guide (8) have/has a profile (10) which encloses at least in portions the sealing element (1) in the non-use position.

5. Residual area covering according to at least one of the preceding claims, **characterized in that** the sealing element (1) in the use position, by means of the support and/or the guide (8), protrudes in a freely projecting manner into the structure gauge (16) to be sealed.

6. Residual area covering according to at least one of the preceding claims, **characterized in that** the sealing element (1) in the use position bears on a floor area and at least one lateral area of the vehicle (11, 23).

7. Residual area covering according to at least one of the preceding claims, **characterized in that** the sealing element (1) has a plurality of subelements which in the use position bear on dissimilar areas of the vehicle (11, 23) and are movable relative to one another.

8. Residual area covering according to at least one of the preceding claims, **characterized in that** the sealing element (1) has at least one dimensionally stable frame (13) which circumferentially encloses the member (3) and the casing (2).

9. Residual area covering according to at least one of the preceding claims, **characterized in that** the member (3) is composed of one or a plurality of contoured and/or shapeless foam elements.

10. Residual area covering according to at least one of the preceding claims, **characterized in that** the member (3) at least in portions has a recess and/or a cut-out which in the use position determine/determines the contour.

11. Residual area covering according to at least one of the preceding claims, **characterized in that** the sealing element (1) is equipped with a suction unit (4).

12. Residual area covering according to at least one of the preceding claims, **characterized in that** the sealing element (1) in the use position is able to be impinged with positive pressure in relation to the ambient pressure.

13. Residual area covering according to at least one of the preceding claims, **characterized in that** the sealing element (1) has a plurality of fluidically isolated regions which are able to be impinged with negative pressure in a mutually independent manner.

14. Residual area covering according to at least one of the preceding claims, **characterized in that** the sealing element (1) is movable from the use position to the non-use position counter to the restoring force of a spring element.

## Revendications

1. Revêtement de surface résiduel servant à réaliser l'étanchéité d'un profil d'espace libre d'un véhicule (11, 23) par rapport à au moins une surface fixe (6) à l'aide d'un élément d'étanchéité (1) pouvant être adapté à un contour extérieur du véhicule (11, 23), lequel élément d'étanchéité, dans une position d'utilisation, remplit au moins dans certaines parties un espace intermédiaire entre le véhicule (11, 23) et la surface fixe (6), l'élément d'étanchéité (1) présentant une enveloppe souple (2) au moins sensiblement étanche aux gaz, de sorte qu'une position de non utilisation comprimée ou une position d'utilisation détendue puisse être réglée par une différence de pression d'un fluide entouré par l'enveloppe (2), l'élément d'étanchéité (1) présentant au moins un corps (3) déformable élastiquement entouré par l'enveloppe (2), lequel corps, par application d'une dépression sur le fluide entouré par l'enveloppe (2), peut être comprimé à l'encontre de sa force de rappel pour le réglage de la position de non utilisation et lequel corps, en cas d'égalisation de pression, adopte sa position d'utilisation détendue en raison des forces de rappel, l'élément d'étanchéité (1) pouvant être séparé du véhicule (11, 23) dans la position de non utilisation et, dans la position d'utilisation détendue, pouvant être appliqué sélectivement contre différentes parties de surface du véhicule (11, 23), en particulier contre un dessous de caisse du véhicule (11, 23), **caractérisé en ce que** l'élément d'étanchéité (1) est disposé de manière mobile en translation sur un support et/ou sur un guide (8) et **en ce que** l'élément d'étanchéité (1) est réalisé de manière mobile entre une position de non utilisation verticale dressée et une position d'utilisation horizontale plate au moyen du support et/ou du guide (8) .

2. Revêtement de surface résiduel selon la revendication 1, **caractérisé en ce que** le support est mobile.

3. Revêtement de surface résiduel selon la revendication 2, **caractérisé en ce que** le support mobile est un bras de support.

4. Revêtement de surface résiduel selon au moins l'une des revendications précédentes, **caractérisé en ce que** le support et/ou le guide (8) présente(nt) un profilé (10) entourant au moins dans certaines parties l'élément d'étanchéité (1) dans la position de non utilisation.

5. Revêtement de surface résiduel selon au moins l'une des revendications précédentes, **caractérisé en ce qu'**au moyen du support et/ou du guide (8), l'élément d'étanchéité (1) pénètre de manière librement saillante dans le profil d'espace libre (16) devant être étanchéifié dans la position d'utilisation.

6. Revêtement de surface résiduel selon au moins l'une des revendications précédentes, **caractérisé en ce que** l'élément d'étanchéité (1) s'appuie contre une surface de base et au moins une surface latérale du véhicule (11, 23) dans la position d'utilisation.

7. Revêtement de surface résiduel selon au moins l'une des revendications précédentes, **caractérisé en ce que** l'élément d'étanchéité (1) présente plusieurs éléments partiels mobiles les uns par rapport aux autres, s'appuyant contre différentes surfaces du véhicule (11, 23) dans la position d'utilisation.

8. Revêtement de surface résiduel selon au moins l'une des revendications précédentes, **caractérisé en ce que** l'élément d'étanchéité (1) présente au moins un cadre (13) à stabilité de forme, entourant du côté périphérique le corps (3) et l'enveloppe (2).

9. Revêtement de surface résiduel selon au moins l'une des revendications précédentes, **caractérisé en ce que** le corps (3) est constitué d'un ou de plusieurs éléments en matériau alvéolaire profilés et/ou sans forme.

10. Revêtement de surface résiduel selon au moins l'une des revendications précédentes, **caractérisé en ce que** le corps (3) présente au moins dans certaines parties un évidement et/ou une ouverture déterminant le contour dans la position d'utilisation.

11. Revêtement de surface résiduel selon au moins l'une des revendications précédentes, **caractérisé en ce que** l'élément d'étanchéité (1) est équipé d'une unité d'aspiration (4).

12. Revêtement de surface résiduel selon au moins l'une des revendications précédentes, **caractérisé en ce que** l'élément d'étanchéité (1) peut être soumis à l'action d'une dépression par rapport à la pression ambiante dans la position d'utilisation.

13. Revêtement de surface résiduel selon au moins l'une des revendications précédentes, **caractérisé en ce que** l'élément d'étanchéité (1) présente plusieurs régions séparées de manière fluidique, pouvant être soumises à une dépression indépendamment les unes des autres.

14. Revêtement de surface résiduel selon au moins l'une des revendications précédentes, **caractérisé en ce que** l'élément d'étanchéité (1) est mobile de la position d'utilisation à la position de non utilisation à l'encontre de la force de rappel d'un élément ressort.
